# EUROPEAN PATENT SPECIFICATION

(11) **EP 0 752 469 B1**
(45) Date of publication and mention of the grant of the patent: **22.09.2004**
(21) Application number: 95870082.5
(22) Date of filing: 05.07.1995
(51) Int. Cl.: C11D 3/39, D06L 3/02

(54) **Laundry pre-treatment with improved fabric/colour safety**
Vorbehandlung von Wäsche mit verbesserter Sicherheit für Gewebe und Farben
Prétraitement de linge de sécurité améliorée pour les tissus et couleurs

(43) Date of publication of application: 08.01.1997
(73) Proprietor: THE PROCTER & GAMBLE COMPANY, Cincinnati, Ohio 45202 (US)
(72) Inventor: Del Duca, Valerio, I-80064 Massalubrense (IT); Ricci, Carlo, I-00151 Rome (IT); Trani, Marina, I-00136 Rome (IT)
(74) Representative: Engisch, Gautier

(56) References cited:
- EP-A- 0 209 228
- EP-A- 0 340 001
- EP-A- 0 349 153
- EP-A- 0 421 974
- EP-A- 0 623 671
- EP-A- 0 672 748
- WO-A-96/26999
- DE-A- 3 543 500
- LU-A- 40 270

## Description

### Technical field

The present invention relates to the pretreatment of soiled fabrics and to compositions suitable to be used as pretreater.

### Background

Peroxygen bleach-containing compositions have been extensively described in laundry applications as laundry detergents, laundry additives or even laundry pretreaters.

Indeed, it is known to use such peroxygen bleach-containing compositions in laundry pretreatment applications to boost the removal of encrustated stains/soils which are otherwise particularly difficult to remove, such as grease, coffee, tea, grass, mud/clay-containing soils and the like. However, we have found that a drawback associated with such peroxygen bleach-containing compositions is that said compositions may damage fabrics resulting in tensile strength loss and/or color damage when used in pretreatment application, i.e. when applied directly (neat) onto the fabrics, and left to act onto said fabrics for prolonged periods of time before washing said fabrics.

It is thus an object of the present invention to provide improved fabric safety and/or color safety to fabrics when pretreating said fabrics with peroxygen bleach-containing compositions, especially in those applications where said compositions are left neat into contact with said fabrics for prolonged periods of time before washing said fabrics.

Indeed, when pretreating fabrics with a composition comprising a peroxygen bleach like hydrogen peroxide, it has been found that the presence of metal ions such as copper and/or iron and/or manganese and/or chromium on the surface of said fabrics and/or the exposure to UV radiation from sunlight of said fabrics after having been contacted with said peroxygen bleach-containing composition, produces fabric damage resulting in loss of tensile strength of the fabric fibres and/or in color damage of said fabrics. Indeed, it is speculated that the presence of metal ions such as copper and/or iron and/or manganese and/or chromium on the surface of the fabrics, especially on cellulosic fibres, and/or the exposure of said fabrics to UV radiation from sunlight catalyse the radical decomposition of peroxygen bleaches like hydrogen peroxide. Thus, it is believed that a radical reaction occurs on the surface of the fabric with generation of free radicals, which results in tensile strength loss. Furthermore, it is speculated that this generation of free radicals may further provide an aggressive decomposition of certain dyes present in the fabrics resulting thereby in chemical damage of dye molecules which is visible as discoloration and/or hue change. Dyes commonly present in colored fabrics include metal containing dyes like copper-formazan dyes or metal-azo dyes.

Therefore we have found essential that this surface reaction resulting in generation of free radicals is controlled in the pretreatment environment, thereby providing improved safety to fabrics and colors.

It has now been found that this can be achieved by formulating a peroxygen bleach-containing composition which comprises a mixture of radical scavengers. More particularly, it has been unexpectedly found that the addition, in a peroxygen bleach-containing composition, of a specific mixture of radical scavengers, i.e. the radical scavenging system as defined hereinafter, results in a synergistic effect on fabric safety and color safety when pretreating a soiled fabric with said composition.

An advantage of the present invention is that excellent laundry performance on a broad range of stains and soils such as bleachable stains and/or greasy stains is also provided.

Another advantage of the present invention is that the compositions suitable to be used according to the present invention provide also excellent performance when used in other applications, apart from laundry pretreater application, such as in other laundry applications, as a laundry detergent or laundry additive, or even in hard surface cleaning applications.

EP-B-209 228 discloses compositions comprising a peroxide source like hydrogen peroxide, metal chelating agents such as amino polyphosphonate chelants and free radical scavengers at a level of from 0.005% to 0.04% by weight of the total composition. Said radical scavengers include butyl hydroxy toluene (BHT) and mono-tert-butyl hydroquinone. The compositions exemplified comprise either BHT alone or MTBHQ. Also, nowhere it is mentioned that peroxygen bleach-containing compositions comprising mixtures thereof, allow to reduce the loss of tensile strength in fabrics and/or color damage of said fabrics, when said fabrics are pretreated with said compositions.

European application EP-A-0 672 748 relates to highly acidic aqueous compositions containing persulfate and from 0.01% to 10% by weight of a radical scavenger, or mixtures thereof. Said radical scavengers include butyl hydroxy toluene (BHT), mono-tert-butyl hydroquinone, benzoic acid, toluic acid, t-butyl catechol, benzylamine and the like. The compositions exemplified in said patent application comprise only BHT alone. Also, nowhere it is mentioned that peroxygen bleach-containing compositions comprising a radical scavenger mixture, allow to reduce the loss of tensile strength in fabrics and/or color damage of said fabrics, when said fabrics are pretreated with said compositions.

European patent application EP-A-0 687 727 relates to bleaching compositions comprising a peroxygen bleach and a water-soluble cationic surfactant in combination with a hydrophilic nonionic surfactant. Said compositions may further comprise from 0.01 % to 2% by weight of a radical scavenger or mixtures thereof, for stability purpose. Said radical scavengers include butyl hydroxy toluene (BHT), mono-tert-butyl hydroquinone benzoic acid, toluic acid, t-butyl catechol benzylamine and the like. None of the compositions exemplified comprises a radical scavenger nor mixtures thereof. Also, nowhere it is mentioned that peroxygen bleach-containing compositions comprising a radical scavenger mixture , allow to reduce the loss of tensile strength in fabrics and/or color damage of said fabrics, when said fabrics are pretreated with said compositions.

WO96/26999 (intermediate publication according to Art 54(3) and (4) EPC relevant for novelly only) claiming the priority of European patent application 95870018.9 discloses hydrogen peroxide-containing compositions comprising a compound chelating copper and/or iron and/or manganese, said compositions being particularly suitable to pretreat fabrics without damaging fabrics. Said compositions may further comprise from 0.001 % to 0.09% by weight of a radical scavenger, or mixtures thereof. Said radical scavengers include butyl hydroxy toluene, hydroquinone, di-tert-butyl hydroquinone and the like. The compositions exemplified comprise only one radical scavenger, i.e. BHT at a level of 0.03% by weight of the total composition. Also, nowhere it is mentioned that peroxygen bleach-containing compositions comprising a radical scavenger mixture, allow to reduce the loss of tensile strength in fabrics and/or color damage of said fabrics, when said fabrics are pretreated with said compositions.

### Summary of the invention

The present invention encompasses a liquid composition comprising a peroxygen bleach and, as a radical scavenging system, at least 0.04% by weight of the total composition of di-tert. butyl hydroxy toluene, which is an aromatic radical scavenger having only one -OH group directly linked on the aromatic ring and at least 0.01% by weight of the total composition of mono tert. butyl hydroquinone or hydroquinone, which are aromatic radical scavengers having two -OH groups disposed in para position.

### Detailed description of the invention

The present invention is based on the finding that, fabric damage resulting in tensile strength loss is reduced, when a liquid composition comprising a peroxygen bleach and a radical scavenger mixture, is used to pretreat a soiled fabric, as compared to the use of the same composition but without any radical scavenger, or mixtures thereof, to pretreat said fabric.

By "to pretreat soiled fabrics" it is to be understood that the liquid composition is applied in its neat form onto the soiled fabric and left to act onto said fabric before said fabric is washed.

In other words, the use of a peroxygen bleach-containing composition comprising a mixture of radical scavengers, allows to considerably reduce the tensile strength loss caused by the presence of copper and/or iron and/or manganese and/or chromium on the fabric surface and/or by the exposure to UV radiation from sunlight of said fabric after having been contacted with said composition, even if said composition is left onto the fabric to be pretreated upon a prolonged period of time before washing said fabric, e.g. about 24 hours, and/or even if said fabric is contaminated by high levels of copper and/or iron and/or manganese and/or chromium, e.g. about 50 ppm of copper per gram of fabric, and/or even if said fabric is left under sunlight exposure for prolonged periods of time, e.g. about 12 hours.

The tensile strength loss of a fabric may be measured by employing the Tensile Strength method, as can be seen in the examples hereinafter. This method consists in measuring the tensile strength of a given fabric by stretching said fabric until it breakes. The force, expressed in Kg, necessary to break the fabric is the "Ultimate Tensile Stress" and may be measured with "The Stress-Strain INSTRON Machine". By "tensile strength loss" it is to be understood the difference when comparing the tensile strength of a fabric taken as a reference, i.e. a fabric which has not been pretreated, and the tensile strength of the same fabric after having been pretreated according to the present invention. A tensile strength loss of zero means that no fabric damage is observed.

Indeed, the present invention is further based on the finding that the color damage of some kinds of dyes present on colored fabrics, as bleach sensitive dyes or metallized dyes, i.e. the color change and/or decoloration, observed when pretreating such soiled colored fabrics with a peroxygen bleach-containing composition comprising a mixture of radical scavengers, is reduced, as compared to the color change and/or decoloration observed when using the same composition but without any radical scavenger, or mixtures thereof. This color change and/or decoloration reduction is observed even if said composition is left onto the soiled colored fabrics upon prolonged periods of time before washing said fabrics, e.g. about 24 hours. In other words, the addition of a radical scavenger mixture to a peroxygen bleach-containing composition suitable to be used as pretreaters allows to prevent the decomposition (oxydation) of dyes generally present on the surface of colored fabrics such as bleach sensitive dyes and/or metallized dyes including copper-formazan dyes and/or metal-azo dyes.

Also fabric tensile strength loss reduction and/or color damage reduction are obtained with liquid compositions according to the present invention comprising a peroxygen bleach and a radical scavenger mixture, without compromising on the bleaching performance nor on the stain removal performance delivered by said compositions.

As an essential element the compositions suitable to be used according to the present invention comprise a peroxygen bleach. Preferred peroxygen bleach is hydrogen peroxide, or a water soluble source thereof, or mixtures thereof. Hydrogen peroxide is most preferred to be used in the compositions according to the present invention. As used herein a hydrogen peroxide source refers to any compound which produces hydrogen peroxide when said compound is in contact with water.

Suitable water-soluble sources of hydrogen peroxide for use herein include percarbonates, persilicate, persulphate such as monopersulfate, perborates and peroxyacids such as diperoxydodecandioic acid (DPDA), magnesium perphthalic acid and mixtures thereof.

Typically, the compositions herein comprise from 0.5% to 20% by weight of the total composition of said peroxygen bleach, preferably from 2% to 15% and most preferably from 3% to 10%. Indeed, the presence of peroxygen bleach, preferably hydrogen peroxide provides strong cleaning benefits which are particularly noticeable in laundry applications.

As a second essential ingredient, the compositions suitable to be used according to the present invention comprise a mixture of aromatic radical scavengers.

Also suitable weight ratio of the peroxygen bleach to the radical scavengers in the liquid compositions herein for improved fabric safety and/or improved color safety when using said compositions as pretreaters is below 500, preferably below 300 and more preferably below 200.

The present invention encompasses liquid compositions comprising a peroxygen bleach and a radical scavenging system, i.e. at least 0.04% by weight of the total composition of di-tert. butyl hydroxy toluene, which is an aromatic radical scavenger having only one -OH group directly linked on the aromatic ring and at least 0.01% by weight of the total composition of mono tert.- butyl hydroxyquinone or hydroxyquinone, which are aromatic radical scavengers having two -OH groups disposed in para position.

Preferably said liquid compositions of the present invention comprise, as said radical scavenging system, from 0.04% to 4% by weight of the total composition of said aromatic radical scavenger having only one -OH group on the ring, more preferably from 0.05% to 2% and most preferably from 0.05% to 1.5%, and from 0.01% to 2% by weight of said aromatic radical scavenger having two -OH groups disposed in para position, more preferably from 0.02% to 0.5% and most preferably from 0.03% to 0.3%.

Di-tert-butyl hydroxy toluene (BHT) is highly preferred herein and may be commercially available for example from SHELL under the name IONOL CP®.

Mono tert-butyl hydroquinone (MTBHQ) may be commercially available for example from EASTMAN CHEMICAL under the name MTBHQ® and hydroquinone (HQ) may be commercially available for example from EASTMAN CHEMICAL under the name HQ®.

It has unexpectedly been found that there is a synergistic effect on fabric safety and color safety associated to the radical scavenging system of the present invention when pretreating a soiled fabric with a peroxygen bleach-containing composition comprising said radical scavenging system as compared to a pretreatment wherein only one of said radical scavenger is used. This synergistic effect is illustrated hereinafter in the experimental data.

The compositions according to the present invention are aqueous liquid cleaning compositions. Said aqueous compositions preferably have a pH as is of from 1 to 9, preferably from 2 to 6 and more preferably from 3 to 5. The pH of the compositions can be adjusted by using organic or inorganic acids, or alkalinising agents.

The compositions herein may comprise a chelating agent as a highly preferred optional ingredient. Suitable chelating agents may be any of those known to those skilled in the art such as the ones selected from the group comprising phosphonate chelating agents, amino carboxylate chelating agents or other carboxylate chelating agents, or polyfunctionally-substituted aromatic chelating agents or mixtures thereof.

Such phosphonate chelating agents may include etidronic acid (1-hydroxyethylidene-bisphosphonic acid or HEDP) as well as amino phosphonate compounds, including amino alkylene poly (alkylene phosphonate), alkali metal ethane 1-hydroxy diphosphonates, nitrilo trimethylene phosphonates, ethylene diamine tetra methylene phosphonates, and diethylene triamine penta methylene phosphonates. The phosphonate compounds may be present either in their acid form or as salts of different cations on some or all of their acid functionalities. Preferred phosphonate chelating agents to be used herein are diethylene triamine penta methylene phosphonates. Such phosphonate chelants are commercially available from Monsanto under the trade name DEQUEST®.

Polyfunctionally-substituted aromatic chelating agents may also be useful in the compositions herein. See U.S. patent 3,812,044, issued May 21, 1974, to Connor et al. Preferred compounds of this type in acid form are dihydroxydisulfobenzenes such as 1,2-dihydroxy-3,5-disulfobenzene. A preferred biodegradable chelating agent for use herein is ethylene diamine N,N'- disuccinic acid, or alkali metal, or alkaline earth, ammonium or substitutes ammonium salts thereof or mixtures thereof. Ethylenediamine N,N'- disuccinic acids, especially the (S,S) isomer have been extensively described in US patent 4, 704, 233, November 3, 1987 to Hartman and Perkins. Ethylenediamine N,N'- disuccinic acid is, for instance, commercially available under the tradename ssEDDS® from Palmer Research Laboratories.

Suitable amino carboxylate chelating agents useful herein include ethylene diamine tetra acetates, diethylene triamine pentaacetates (DTPA), N-hydroxyethylethylenediamine triacetates, nitrilotriacetates, ethylenediamine tetraproprionates, triethylenetetraaminehexaacetates, ethanoldiglycines, propylene diamine tetracetic acid (PDTA) and methyl glycine di-acetic acid (MGDA), both in their acid form, or in their alkali metal, ammonium, and substituted ammonium salt forms. Particularly suitable to be used herein are diethylene triamine penta acetic acid (DTPA), propylene diamine tetracetic acid (PDTA) which is, for instance, commercially available from BASF under the trade name Trilon FS® and methyl glycine di-acetic acid (MGDA).

Further carboxylate chelating agents to be used herein includes malonic acid, salicylic acid, glycine, aspartic acid, glutamic acid, or mixtures thereof.

The chelating agents mentioned herein are particularly suitable to be used herein as they further contribute to reduce the tensile strength loss. Accordingly highly preferred chelating agents to be used herein include propylene diamine tetracetic acid (PDTA), methyl glycine di-acetic acid (MGDA), diethylene triamine penta acetic acid (DTPA), diethylene triamine penta methylene phosphonate, ethylenediamine N,N'- disuccinic acid (S,S-EDDS), salicylic acid, malonic acid, etidronic acid (1-hydroxyethylidene-bisphosphonic acid or HEDP), or mixtures thereof.

Typically, the compositions according to the present invention comprise up to 5% by weight of the total composition of a chelating agent, or mixtures thereof, preferably from 0.01% to 1.5% by weight and more preferably from 0.01% to 0.5%.

The compositions of the present invention may further comprise any surfactant known to those skilled in the art including nonionic, anionic, cationic, zwitterionic and/or amphotheric surfactants.

Accordingly, the compositions of the present invention further comprise a nonionic surfactant, or mixtures thereof. Typically, the compositions according to the present invention comprise from 0.1% to 50% by weight of the total composition of said nonionic surfactant, or mixtures thereof, preferably from 0.3 % to 30 % and more preferably from 0.4 % to 25 %.

Suitable nonionic surfactants to be used herein are fatty alcohol ethoxylates and/or propoxylates which are commercially available with a variety of fatty alcohol chain lengths and a variety of ethoxylation degrees. Indeed, the HLB values of such alkoxylated nonionic surfactants depend essentially on the chain length of the fatty alcohol, the nature of the alkoxylation and the degree of alkoxylation. Surfactant catalogues are available which list a number of surfactants, including nonionics, together with their respective HLB values.

Suitable chemical processes for preparing the nonionic surfactants for use herein include condensation of corresponding alcohols with alkylene oxide, in the desired proportions. Such processes are well known to the man skilled in the art and have been extensively described in the art. As an alternative, a great variety of alkoxylated alcohols suitable for use herein is commercially available from various suppliers.

Particularly suitable to be used herein as nonionic surfactants are hydrophobic nonionic surfactants having an HLB (hydrophilic-lipophilic balance) below 16, preferably below 15, more preferably below 12, and most preferably below 10. Those hydrophobic nonionic surfactants have been found to provide good grease cutting properties.

Preferred hydrophobic nonionic surfactants to be used in the compositions according to the present invention are surfactants having an HLB below 16 and being according to the formula RO-(C₂H₄O)ₙ(C₃H₆O)ₘH, wherein R is a C₆ to C₂₂ alkyl chain or a C₆ to C₂₈ alkyl benzene chain, and wherein n+m is from 0 to 20 and n is from 0 to 15 and m is from 0 to 20, preferably n+m is from 1 to 15 and, n and m are from 0.5 to 15, more preferably n+m is from 1 to 10 and, n and m are from 0 to 10. The preferred R chains for use herein are the C₈ to C₂₂ alkyl chains. Accordingly suitable hydrophobic nonionic surfactants for use herein are Dobanol ^{R} 91-2.5 (HLB= 8.1; R is a mixture of C9 and C₁₁ alkyl chains, n is 2.5 and m is 0), or Lutensol ^{R} TO3 (HLB=8; R is a C₁₃ alkyl chain, n is 3 and m is 0), or Lutensol ^{R} AO3 (HLB=8; R is a mixture of C₁₃ and C₁₅ alkyl chains, n is 3 and m is 0), or Tergitol ^{R} 25L3 (HLB= 7.7; R is in the range of C₁₂ to C₁₅ alkyl chain length, n is 3 and m is 0), or Dobanol ^{R} 23-3 (HLB=8.1; R is a mixture of C₁₂ and C₁₃ alkyl chains, n is 3 and m is 0), or Dobanol ^{R} 23-2 (HLB=6.2; R is a mixture of C₁₂ and C₁₃ alkyl chains, n is 2 and m is 0), or Dobanol ^{R} 45-7 (HLB=11.6; R is a mixture of C₁₄ and C₁₅ alkyl chains, n is 7 and m is 0) Dobanol ^{R} 23-6.5 (HLB=11.9; R is a mixture of C₁₂ and C₁₃ alkyl chains, n is 6.5 and m is 0), or Dobanol ^{R} 25-7 (HLB=12; R is a mixture of C₁₂ and C₁₅ alkyl chains, n is 7 and m is 0), or Dobanol ^{R} 91-5 (HLB=11.6; R is a mixture of C₉ and C₁₁ alkyl chains, n is 5 and m is 0), or Dobanol ^{R} 91-6 (HLB=12.5; R is a mixture of C₉ and C₁₁ alkyl chains, n is 6 and m is 0), or Dobanol ^{R} 91-8 (HLB=13.7; R is a mixture of C₉ and C₁₁ alkyl chains, n is 8 and m is 0), Dobanol ^{R} 91-10 (HLB=14.2; R is a mixture of C₉ to C₁₁ alkyl chains, n is 10 and m is 0), or mixtures thereof. Preferred herein are Dobanol ^{R} 91-2.5 , or Lutensol ^{R} TO3, or Lutensol ^{R} AO3, or Tergitol ^{R} 25L3, or Dobanol ^{R} 23-3, or Dobanol ^{R} 23-2, or mixtures thereof. These Dobanol^{R} surfactants are commercially available from SHELL. These Lutensol^{R} surfactants are commercially available from BASF and these Tergitol ^{R} surfactants are commercially available from UNION CARBIDE.

Preferred compositions according to the present invention further comprise an anionic surfactant, or mixtures thereof. Said anionic surfactants which are hydrophilic compounds act together with the hydrophobic surfactants such as to counterbalance the negative effect of hydrophobic surfactants. Said anionic surfactants act as wetting agent, i.e. in laundry application they wet the stains on the fabrics, especially on hydrophilic fabrics, and thus help hydrogen peroxide to perform its bleaching action thereby contributing to improved laundry performance on bleachable stains. Furthermore, the anionic surfactants of the present invention allow to obtain clear compositions even when said compositions comprise hydrophobic ingredients such as hydrophobic surfactants. Typically, the compositions according to the present invention comprise from 0.1 % to 20 % by weight of the total composition of said anionic surfactant, or mixtures thereof, preferably from 0.2 % to 15 % and more preferably from 0.5 % to 13 %.

Particularly suitable to be used in the present invention are sulfonate and sulfate surfactants. The like anionic surfactants are well-known in the art and have found wide application in commercial detergents. These anionic surfactants include the C8-C22 alkyl benzene sulfonates (LAS), the C8-C22 alkyl sulfates (AS), unsaturated sulfates such as oleyl sulfate, the C10-C18 alkyl alkoxy sulfates (AES) and the C10-C18 alkyl alkoxy carboxylates. The neutralising cation for the anionic synthetic sulfonates and/or sulfates is represented by conventional cations which are widely used in detergent technology such as sodium, potassium or alkanolammonium. Preferred herein are the alkyl sulphate, especially coconut alkyl sulphate having from 6 to 18 carbon atoms in the alkyl chain, preferably from 8 to 15, or mixtures thereof.

The compositions suitable to be used according to the present invention may further comprise a foam suppressor such as 2-alkyl alkanol, or mixtures thereof, as a highly preferred optional ingredient. Particularly suitable to be used in the present invention are the 2-alkyl alkanols having an alkyl chain comprising from 6 to 16 carbon atoms, preferably from 8 to 12 and a terminal hydroxy group, said alkyl chain being substituted in the α position by an alkyl chain comprising from 1 to 10 carbon atoms, preferably from 2 to 8 and more preferably 3 to 6. Such suitable compounds are commercially available, for instance, in the Isofol® series such as Isofol® 12 (2-butyl octanol) or Isofol® 16 (2-hexyl decanol). Typically, the compositions suitable to be used herein comprise from 0.05 % to 2 % by weight of the total composition of a 2-alkyl alkanol, or mixtures thereof, preferably from 0.1 % to 1.5 % and most preferably from 0.1 % to 0.8 %.

The compositions herein may further comprise a variety of other optional ingredients such as builders, stabilisers, bleach activators, soil suspenders, dye transfer agents, solvents, brighteners, perfumes, and dyes.

Although preferred application of the compositions described herein is laundry pretreatment, the compositions according to the present invention may also be used as a laundry detergent or as a laundry detergent booster.

Suitable process of pretreating soiled fabrics with a liquid composition comprising a peroxygen bleach and a radical scavenger mixture, is for example a process which comprises the steps of applying said composition in its neat form onto the fabric and allowing said composition to remain in contact with said fabric preferably without leaving said composition to dry onto said fabric, before said fabric is washed. Said composition may remain in contact with said fabric, typically for a period of 1 minute to 24 hours, preferably 1 minute to 1 hour and more preferably 5 minutes to 30 minutes. Optionally, when the fabric is soiled with encrusted stains/soils which otherwise would be relatively difficult to remove, the compositions according to the present invention may be rubbed and/or brushed more or less intensively, for example, by means of a sponge or a brush or simply by rubbing two pieces of fabric against each other.

By "washing" it is to be understood herein to simply rinse the fabrics with water, or the fabrics may be washed with conventional compositions comprising at least one surface active agent, this by means of a washing machine or simply by hand.

By "in its neat form" it is to be understood that the compositions described herein are applied directly onto the fabrics to be pretreated without undergoing any dilution.

In a process of pretreating soiled fabrics particularly suitable to be used herein, the liquid compositions should preferably not be left to dry onto the fabrics. Indeed, it has been found that water evaporation contributes to increase the concentration of free radicals onto the surface of the fabrics and, consequently, the rate of chain reaction. It is also speculated that an auto-oxidation reaction occurs upon evaporation of water when the liquid compositions are left to dry onto the fabrics. Said reaction of auto-oxidation generates peroxy-radicals which may contribute to the degradation of cellulose. Thus, not leaving the liquid compositions, as described herein, to dry onto the fabric, in a process of pretreating soiled fabrics, contributes to the benefits according the present invention, i. e. to reduce the tensile strength loss when pretreating fabrics with liquid peroxygen bleach-containing compositions.

The present invention will be further illustrated by the following examples.

### Experimental data

### A) Tensile strength test method

The following compositions were made by mixing the listed ingredients in the listed proportions (weight % unless otherwise specified).

| Compositions | I | II | III | IV | V | VI |
|---|---|---|---|---|---|---|
| | | | | | | |
| Alkylsulphate | 1.2 | 1.2 | 1.2 | 1.2 | 1.2 | 1.2 |
| Dobanol® 91-10 | 1.6 | 1.6 | 1.6 | 1.6 | 1.6 | 1.6 |
| Dobanol® 23-3 | 1.1 | 1.1 | 1.1 | 1.1 | 1.1 | 1.1 |
| DETPMP | 0.18 | 0.18 | 0.18 | 0.18 | 0.18 | 0.18 |
| H₂O₂ | 7.0 | 7.0 | 7.0 | 7.0 | 7.0 | 7.0 |
| Isofol® 12 | 0.5 | 0.5 | 0.5 | 0.5 | 0.5 | 0.5 |
| BHT | ---- | 0.5 | 1.0 | 2.0 | 1.0 | 1.0 |
| MTBHQ | ---- | ---- | ---- | ---- | 0.09 | ---- |
| HQ | ---- | ---- | ---- | ---- | ---- | 0.09 |
| Water and minors H2SO4 up to pH 4 | ------------------------------ up to 100%------------------------ | | | | | |
| | | | | | | |
| Tensile strength loss (%) | 42 | 18 | 20 | 14 | 2 | 6 |

50 ppm Copper per gram of fabric
Pretreatment 24 hours

DETPMP is diethylene triamine penta methylene phosphonate marketed by Monsanto under the trade name REQUEST®.
MTBHQ is mono tert-butyl hydroquinone marketed by EASTMAN CHEMICALS under the trade name MTBHQ®.
HQ is hydroquinone marketed by EASTMAN CHEMICALS under the trade name HQ®.
BHT is di-tert-butyl-hydroxy toluene marketed by SHELL under the trade name IONOL CP®.

Compositions to IV are taken as a reference; they comprise hydrogen peroxide and at most one radical scavenger. Composition V to VI are representative of the present invention, they comprise hydrogen peroxide and a radical scavenger system.

### The following test was carried out:

A tensile strength test method was carried out with the compositions mentioned hereinabove. This test method was carried out on metal-polluted fabrics.
Cotton ribbons (dimension 12.5 x 5 cm²) having a copper concentration of 50 ppm per gram of cotton were pretreated according to the present invention. Indeed, the cotton ribbons were pretreated with 2 ml of each of the liquid compositions mentioned herein before. The compositions were left in contact with the ribbons for 24 hours, before being rinsed with water. After that, the damage on the fabrics, i.e. cotton ribbons, was evaluated by stretching said ribbons until they broke. The force necessary to break the ribbons, i.e. the Ultimate Tensile Stress, was measured, in wet conditions, with "The Stress-Strain INSTRON Machine". The lower the force needed to break said cotton ribbons, the more serious is the damage caused on the fabrics. A good confidence (standard deviation=2-4 Kg) on the results is obtained using five replicates for each test.

The tensile strength loss mentioned above for the different compositions tested is expressed in percentage and is obtained by comparing the tensile strength of a given fabric taken as a reference, i.e. a fabric which has not been pretreated, to the tensile strength of the same fabric measured after said fabric has been pretreated as mentioned hereinbefore.

The above results clearly show the unexpected fabric safety improvement, i.e. reduction of tensile strength loss, obtained by using liquid compositions according to the present invention comprising a peroxygen bleach and a radical scavenger or mixtures thereof, as compared to the use of the same composition but without any radical scavenger (composition I).

More particularly the above results surprisingly show the synergistic effect of the use of a radical scavenging system according to the present invention in a peroxygen bleach-containing composition on fabric safety when pretreating fabrics with said composition. Indeed, there is virtually no tensile strength loss observed when pretreating fabrics with compositions according to the present invention comprising said radical scavenging system (see in particular compositions V and VI versus compositions I to IV), this even upon a long contact period, i.e. 24 hours and in presence of a high concentration of copper on the surface of said fabrics, i.e. 50 ppm per gram of cotton fabric.

### B) Color safety test method

The following compositions were made by mixing the listed ingredients in the listed proportions (weight % unless otherwise specified).

| Compositions | I | II | III | IV |
|---|---|---|---|---|
| Alkylsulphate | 1.2 | 1.2 | 1.2 | 1.2 |
| Dobanol® 91-10 | 1.6 | 1.6 | 1.6 | 1.6 |
| Dobanol® 23-3 | 1.1 | 1.1 | 1.1 | 1.1 |
| H₂O₂ | 7.0 | 7.0 | 7.0 | 7.0 |
| Isofol® 12 | 0.5 | 0.5 | 0.5 | 0.5 |
| DTPA | 0.1 | 0.1 | 0.1 | 0.1 |
| BHT | ---- | 0.3 | 0.1 | 0.1 |
| HQ | ---- | ---- | 0.1 | ---- |
| MTBHQ | ---- | ---- | ---- | 0.1 |
| Water and minors H2SO4 up to pH 4 | --------------up to 100%--------------- | | | |
| DTPA is diethylene triamine penta acetic acid. MTBHQ is mono tert-butyl hydroquinone marketed by EASTMAN CHEMICALS under the trade name MTBHQ®. HQ is hydroquinone marketed by EASTMAN CHEMICALS under the trade name HQ®. BHT is di-tert-butyl-hydroxy toluene marketed by SHELL under the trade name IONOL CP®. | | | | |

Compositions I and II are taken as a reference; they comprise hydrogen peroxide and at most one radical scavenger. Composition III to IV are representative of the present invention, they comprise hydrogen peroxide and a radical scavenger system.

### The following test method was carried out:

Color safety tests were carried out to assess the dye damaging action of the compositions I to IV, mentioned hereinabove.
Cotton swatches colored with direct blue 1 as well as cotton swatches colored with reactive purple were pretreated with 1 ml of each composition leaving it in contact with said swatches for 24 hours, before being rinsed with water. Said colored swatches are commercially available from Empirical manufacturing company, Cincinnati. The damage (discoloration or hue change) was evaluated by visual grading and by instrumental methods with the "HunterLab Tristimulus MINISCAN".

The results were as follows:

| Color damage on bleach sensitive dyes | | | | |
|---|---|---|---|---|
| | Compositions | | | |
| Colors | I | II | III | IV |
| Direct Blue 1 | S | - | - | - |
| Reactive Purple | VS | - | - | - |
| Color Damage after 24 h pretreatment: VS=Very Strong, S=Strong, M=Medium, L=Light, - = No Damage | | | | |

The above results clearly show the unexpected color safety improvement, i.e. reduction of discoloration and/or hue change of colored fabrics, obtained by using liquid compositions according to the present invention comprising a peroxygen bleach and a radical scavenger or mixtures thereof, as compared to the use of the same composition but without any radical scavenger (composition I).

### Examples

Following compositions were made by mixing the listed ingredients in the listed proportions (weight % unless otherwise specified).

| Compositions | I | II |
|---|---|---|
| Alkylsulphate | 1.2 | 1.2 |
| Dobanol® 91-10 | 1.6 | 1.6 |
| Dobanol® 23-3 | 1.1 | 1.1 |
| H₂O₂ | 7.0 | 7.0 |
| Isofol® 12 | 0.5 | 0.5 |
| DTPA | 0.1 | --- |
| HEDP | --- | 0.18 |
| BHT | 0.1 | 0.1 |
| HQ | 0.1 | 0.1 |
| Water and minors H2SO4 up to pH 4 | ---up to 100%--- | |

| Compositions | III | IV |
|---|---|---|
| Alkylsulphate | 2.0 | 12 |
| Dobanol® 45-7 | 8.6 | --- |
| Dobanol® 23-3 | 6.4 | 12 |
| ATC | 3.5 | 3.5 |
| H₂O₂ | 6.0 | 6.0 |
| BHT | 0.1 | 0.1 |
| HQ | 0.1 | 0.1 |
| Water and minors H2SO4 up to pH 4 | ---up to 100%-- | |
| DTPA is diethylene triamine penta acetic acid. HQ is hydroquinone marketed by EASTMAN CHEMICALS under the trade name HQ®. BHT is di-tert-butyl-hydroxy toluene marketed by SHELL under the trade name IONOL CP®. HEDP is etidronic acid. ATC is acetyl triethyl citrate. | | |

## Claims

1. A liquid aqueous composition comprising a peroxygen bleach and, as a radical scavenging system, at least 0.04% by weight of the total composition of di-tert. butyl hydroxy toluene, which is an aromatic radical scavenger having only one -OH group directly linked on the aromatic ring and at least 0.01% by weight of mono tert. butyl hydroquinone or hydroquinone, which are a aromatic radical scavengers having two -OH goups disposed in para position.

2. A composition according to claim 1 wherein said composition comprises, as said radical scavenging system, from 0.04% to 4% by weight of the total composition of said aromatic radical scavenger having only one -OH group directly linked on the aromatic ring, preferably from 0.05% to 2% and more preferably from 0.05% to 1.5 %, and from 0.01% to 2% by weight of the total composition of said aromatic radical scavenger having two -OH disposed in para position, preferably from 0.02% to 0.5% and more preferably from 0.03% to 0.3%.

3. A composition according to claims 1 or 2 wherein said peroxygen bleach is hydrogen peroxide or a water soluble source thereof, preferably hydrogen peroxide, and wherein said composition comprises from 0.5% to 20% by weight of the total composition of said peroxygen bleach, preferably from 2% to 15% and more preferably from 3% to 10%.

4. A composition according to claims 1 to 3 wherein said composition further comprises a chelating agent preferably selected from the group of phosphonate chelating agents, amino carboxylate chelating agents or other carboxylate chelating agents, polyfunctionally-substituted aromatic chelating agents, or mixtures thereof and more preferably is di-ethylen-triamino-pentaacetic acid, diethylene triamine penta methylene phosphonate, ethylenediamine N, N'-disuccinic acid, propylene diamine tetracetic acid, methyl glycine di-acetic acid, malonic acid, salicylic acid, 1-hydroxyethylidene-bisphosphonic acid or mixtures thereof.

5. A composition according to claims 1 to 4 wherein said composition has a pH of from 1 to 9, preferably from 2 to 6 and more preferably from 3 to 5.

## Patentansprüche

1. Flüssige, wässrige Zusammensetzung, umfassend ein Persauerstoff-Bleichmittel und als Radikalfängersystem mindestens 0,04 Gew.-% der Gesamtzusammensetzung Di-tert-butylhydroxytoluol, bei dem es sich um einen aromatischen Radikalfänger mit nur einer direkt an den aromatischen Ring gebundenen - OH-Gruppe handelt, und mindestens 0,01 Gew.-% Mono-tert-butylhydrochinon oder Hydrochinon, bei denen es sich um aromatische Radikalfänger mit zwei in para-Position angeordneten -OH-Gruppen handelt.

2. Zusammensetzung nach Anspruch 1, wobei die Zusammensetzung als Radikalfängersystem 0,04 bis 4 Gew.-% der Gesamtzusammensetzung des aromatischen Radikalfängers mit nur einer direkt an den aromatischen Ring gebundenen - OH-Gruppe, vorzugsweise 0,05% bis 2%, und weiter vorzugsweise 0,05% bis 1,5%, und 0,01 bis 2 Gew.-% der Gesamtzusammensetzung des aromatischen Radikalfängers mit zwei in para-Position angeordneten -OH-Gruppen, vorzugsweise 0,02% bis 0,5%, und weiter vorzugsweise 0,03% bis 0,3%, umfasst.

3. Zusammensetzung nach Anspruch 1 oder 2, wobei das Persauerstoff-Bleichmittel Wasserstoffperoxid oder eine wasserlösliche Quelle hierfür ist, vorzugsweise Wasserstoffperoxid, und wobei die Zusammensetzung 0,5 bis 20 Gew.-% der Gesamtzusammensetzung des Persauerstoff-Bleichmittels umfasst, vorzugsweise 2% bis 15%, und weiter vorzugsweise 3% bis 10%.

4. Zusammensetzung nach mindestens einem der Ansprüche 1 bis 3, wobei die Zusammensetzung weiterhin einen Komplexbildner umfasst, vorzugsweise gewählt aus der Gruppe der Phosphonat-Komplexbildner, Aminocarboxylat-Komplexbildner oder anderen Carboxylat-Komplexbildnern, polyfunktionell-substituierten aromatischen Komplexbildnern oder Mischungen hiervon, und weiter vorzugsweise Diethylentriaminopentaessigsäure, Diethylentriaminpentamethylenphosphonat, Ethylendiamin-N,N'-dibernsteinsäure, Propylendiamintetraessigsäure, Methylglycindiessigsäure, Malonsäure, Salicylsäure, 1-Hydroxyethylidenbisphosphonsäure oder Mischungen hiervon.

5. Zusammensetzung nach mindestens einem der Ansprüche 1 bis 4, wobei die Zusammensetzung einen pH von 1 bis 9, vorzugsweise 2 bis 6, und weiter vorzugsweise 3 bis 5, aufweist.

## Revendications

1. Composition liquide aqueuse comprenant un agent de blanchiment peroxygéné, et, en tant que système de piégeage des radicaux, au moins 0,04 %, en poids de la composition totale, de di-tert.butylhydroxy toluène, qui est un agent aromatique de piégeage des radicaux comportant seulement un groupe -OH directement lié au cycle aromatique, et au moins 0,01 % en poids de mono-tert.-butyl-hydroquinone ou d'hydroquinone, qui sont des agents aromatiques de piégeage des radicaux comportant deux groupes -OH disposés en position para.

2. Composition selon la revendication 1, dans laquelle ladite composition comprend, en tant que système de piégeage des radicaux, de 0,04 % à 4 %, en poids de la composition totale, dudit agent aromatique de piégeage des radicaux comportant seulement un groupe -OH directement lié au cycle aromatique, de préférence de 0,05 % à 2 % et de façon plus préférentielle de 0,05 % à 1,5 %, et de 0,01 % à 2 %, en poids de la composition totale, dudit agent aromatique de piégeage des radicaux comportant deux groupes -OH disposés en position para, de préférence de 0,02 % à 0,5 % et de façon plus préférentielle de 0,03 % à 0,3 %.

3. Composition selon les revendications 1 ou 2, dans laquelle ledit agent de blanchiment peroxygéné est du peroxyde d'hydrogène ou une source hydrosoluble de celui-ci, de préférence du peroxyde d'hydrogène, et dans laquelle ladite composition comprend 0,5 % à 20 %, en poids de la composition totale, dudit agent de blanchiment peroxygéné, de préférence 2 % à 15 % et de façon plus préférentielle 3 % à 10 %.

4. Composition selon l'une des revendications 1 à 3, dans laquelle ladite composition comprend en outre un agent chélatant choisi de préférence dans le groupe composé des agents chélatants phosphonate, des agents chélatants aminocarboxylate, ou d'autres agents chélatants carboxylate, des agents chélatants aromatiques à substitution polyfonctionnelle, ou des mélanges de ceux-ci, et plus préférablement l'acide diéthylène-triamino-pentaacétique, le diéthylènetriamine-pentaméthylène-phosphonate, l'acide éthylènediamine-N,N'-disuccinique, l'acide propylènediamine-tétraacétique, l'acide méthylglycine-di-acétique, l'acide malonique, l'acide salicylique, l'acide 1-hydroxyéthylidène-biphosphonique, ou leurs mélanges.

5. Composition selon l'une des revendications 1 à 4, dans laquelle ladite composition a un pH de 1 à 9, de préférence de 2 à 6 et de façon plus préférentielle de 3 à 5.
